# EUROPEAN PATENT APPLICATION

(11) **EP 4 642 059 A1**
(43) Date of publication of application: **29.10.2025**
(21) Application number: 23907565.8
(22) Date of filing: 13.12.2023
(51) Int. Cl.: H04W 4/06, H04W 4/40, H04W 4/38, H04W 8/22, H04W 4/02

(54) **METHOD AND APPARATUS FOR PROCESSING SENSOR INFORMATION INTO RECEIVER-ORIENTED INFORMATION AND SHARING RECEIVER-ORIENTED INFORMATION, ON BASIS OF UNICAST OR GROUPCAST**

(30) Priority: 23.12.2022 KR 20220183583
(71) Applicant: LG Electronics Inc., Yeongdeungpo-gu Seoul 07336 (KR)
(72) Inventor: BYUN, Jaihyun, Seoul 06772 (KR); SEO, Hanbyul, Seoul 06772 (KR)
(74) Representative: Plasseraud IP
(86) International application number: PCT/KR2023/020532
(87) International publication number: WO 2024/136279

(57) **Abstract**

Provided are a method by which a first device performs wireless communication and an apparatus supporting same. The method may comprise the steps of: detecting, on the basis of sensing, information related to a plurality of zones and information related to one or more objects included in the plurality of zones; receiving state information from a second device; on the basis of the state information, selecting a valid zone from among the plurality of zones; determining a valid object included in the valid zone from among the one or more objects included in the plurality of zones; and transmitting, to the second device, information related to the valid object included in the valid zone.

## Description

### TECHNICAL FIELD

This disclosure relates to a wireless communication system.

### BACKGROUND ART

Sidelink (SL) communication is a communication scheme in which a direct link is established between User Equipments (UEs) and the UEs exchange voice and data directly with each other without intervention of a base station. SL communication is under consideration as a solution to the overhead of a base station caused by rapidly increasing data traffic. Vehicle-to-everything (V2X) refers to a communication technology through which a vehicle exchanges information with another vehicle, a pedestrian, an object having an infrastructure (or infra) established therein, and so on. The V2X may be divided into 4 types, such as vehicle-to-vehicle (V2V), vehicle-to-infrastructure (V2I), vehicle-to-network (V2N), and vehicle-to-pedestrian (V2P). The V2X communication may be provided via a PC5 interface and/or Uu interface.

Meanwhile, as a wider range of communication devices require larger communication capacities, the need for mobile broadband communication that is more enhanced than the existing Radio Access Technology (RAT) is rising. Accordingly, discussions are made on services and user equipment (UE) that are sensitive to reliability and latency. And, a next generation radio access technology that is based on the enhanced mobile broadband communication, massive Machine Type Communication (MTC), Ultra-Reliable and Low Latency Communication (URLLC), and so on, may be referred to as a new radio access technology (RAT) or new radio (NR).

### DISCLOSURE

### TECHNICAL SOLUTION

In one embodiment, provided is a method for performing wireless communication by a first device. The method may comprise: detecting information related to a plurality of zones and information related to one or more objects included in the plurality of zones, based on sensing; receiving, from a second device, state information; selecting a valid zone among the plurality of zones, based on the state information; determining a valid object included in the valid zone among the one or more objects included in the plurality of zones; and transmitting, to the second device, information related to the valid object included in the valid zone.

In one embodiment, provided is a first device configured to perform wireless communication. The first device may comprise: at least one transceiver; at least one processor; and at least one memory connected to the at least one processor and storing instructions. For example, the instructions, based on being executed by the at least one processor, cause the first device to perform operations comprising: detecting information related to a plurality of zones and information related to one or more objects included in the plurality of zones, based on sensing; receiving, from a second device, state information; selecting a valid zone among the plurality of zones, based on the state information; determining a valid object included in the valid zone among the one or more objects included in the plurality of zones; and transmitting, to the second device, information related to the valid object included in the valid zone.

In one embodiment, provided is a processing device configured to control a first device. The processing device may comprise: at least one processor; and at least one memory connected to the at least one processor and storing instructions. For example, the instructions, based on being executed by the at least one processor, cause the first device to perform operations comprising: detecting information related to a plurality of zones and information related to one or more objects included in the plurality of zones, based on sensing; receiving, from a second device, state information; selecting a valid zone among the plurality of zones, based on the state information; determining a valid object included in the valid zone among the one or more objects included in the plurality of zones; and transmitting, to the second device, information related to the valid object included in the valid zone.

In one embodiment, provided is a non-transitory computer-readable storage medium recording instructions. For example, the instructions, based on being executed, cause a first device to perform operations comprising: detecting information related to a plurality of zones and information related to one or more objects included in the plurality of zones, based on sensing; receiving, from a second device, state information; selecting a valid zone among the plurality of zones, based on the state information; determining a valid object included in the valid zone among the one or more objects included in the plurality of zones; and transmitting, to the second device, information related to the valid object included in the valid zone.

### BRIEF DESCRIPTION OF THE DRAWINGS

FIG. 1 shows a communication structure that can be provided in the 6G system, based on an embodiment of the present disclosure.
FIG. 2 shows an electromagnetic spectrum, based on an embodiment of the present disclosure.
FIG. 3 shows a scenario in which sensor information measured by a sensor equipped on an RSU at an intersection is provided to a receiver through a message.
FIG. 4 shows an operation of a sensor information provider directly/indirectly identifying the required information of a receiver.
FIG. 5 shows a detection zone of a sensor at an intersection, based on an embodiment of the present disclosure.
FIG. 6 shows a segmented detection zone, based on an embodiment of the present disclosure.
FIG. 7 shows an operation of selecting a valid sensor detection zone for a receiver stopped at an intersection, based on an embodiment of the present disclosure.
FIG. 8 shows an operation of a sensor selecting a detection zone based on an expected driving path of a receiver, based on an embodiment of the present disclosure.
FIG. 9 shows an operation of selecting only object information on a road and crosswalk based on the state information or request message of a receiver, based on an embodiment of the present disclosure.
FIG. 10 shows an operation of a sensor information provider changing the transmission period of sensor information based on the location and velocity of a receiver, based on an embodiment of the present disclosure.
FIG. 11 shows a method for performing wireless communication by a first device, based on an embodiment of the present disclosure.
FIG. 12 shows a method for performing wireless communication by a second device, based on an embodiment of the present disclosure.
FIG. 13 shows a communication system 1, based on an embodiment of the present disclosure.
FIG. 14 shows wireless devices, based on an embodiment of the present disclosure.
FIG. 15 shows a signal process circuit for a transmission signal, based on an embodiment of the present disclosure.
FIG. 16 shows another example of a wireless device, based on an embodiment of the present disclosure.
FIG. 17 shows a hand-held device, based on an embodiment of the present disclosure.
FIG. 18 shows a vehicle or an autonomous vehicle, based on an embodiment of the present disclosure.

### MODE FOR INVENTION

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (i.e., PDCCH)", it may also mean that "PDCCH" is proposed as an example of the "control information".

In the following description, 'when, if, or in case of' may be replaced with 'based on'.

A technical feature described individually in one figure in the present disclosure may be individually implemented, or may be simultaneously implemented

In the present disclosure, a higher layer parameter may be a parameter which is configured, pre-configured or predefined for a UE. For example, a base station or a network may transmit the higher layer parameter to the UE. For example, the higher layer parameter may be transmitted through radio resource control (RRC) signaling or medium access control (MAC) signaling.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on. IEEE 802.16m is an evolved version of IEEE 802.16e and provides backward compatibility with a system based on the IEEE 802.16e. The UTRA is part of a universal mobile telecommunication system (UMTS). 3rd generation partnership project (3GPP) long term evolution (LTE) is part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

5G NR is a successive technology of LTE-A corresponding to a new Clean-slate type mobile communication system having the characteristics of high performance, low latency, high availability, and so on. 5G NR may use resources of all spectrum available for usage including low frequency bands of less than 1GHz, middle frequency bands ranging from 1GHz to 10GHz, high frequency (millimeter waves) of 24GHz or more, and so on.

The 6G (wireless communication) system is aimed at (i) very high data rates per device, (ii) a very large number of connected devices, (iii) global connectivity, (iv) very low latency, (v) lower energy consumption for battery-free IoT devices, (vi) ultra-reliable connectivity, and (vii) connected intelligence with machine learning capabilities. The vision of the 6G system can have four aspects: intelligent connectivity, deep connectivity, holographic connectivity, and ubiquitous connectivity, and the 6G system can satisfy the requirements as shown in Table 1 below. In other words, Table 1 is an example of the requirements of a 6G system.

**[Table 1]**

| | |
|---|---|
| Per device peak data rate | 1 Tbps |
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

6G systems can have key elements such as enhanced mobile broadband (eMBB), ultra-reliable low latency communications (URLLC), massive machine-to-machine communications (mMTC), Al-integrated communications, tactile internet, high throughput, high network capacity, high energy efficiency, low backhaul and access network congestion, and enhanced data security.

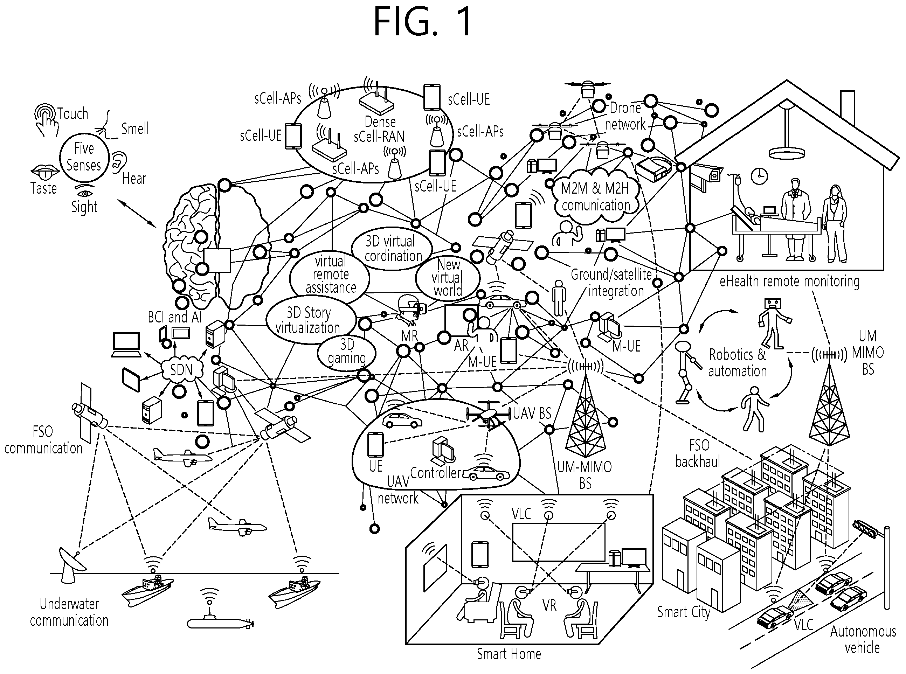

FIG. 1 shows a communication structure that can be provided in the 6G system, based on an embodiment of the present disclosure. The embodiment of FIG. 1 may be combined with various embodiments of the present disclosure.

6G systems are expected to have 50 times higher simultaneous radio connectivity than 5G radio systems. URLLC, a key feature of 5G, will become a more dominant technology in 6G communications, providing end-to-end delay of less than 1 ms. 6G systems will have much better volumetric spectral efficiency as opposed to the more commonly used area spectral efficiency. 6G systems will be able to offer very long battery life and advanced battery technologies for energy harvesting, so mobile devices will not need to be charged separately in a 6G system. New network characteristics in 6G may include the following.
- Satellites integrated network: In order to provide a global mobile population, 6G is expected to be integrated with satellites. The integration of terrestrial, satellite, and airborne networks into a single wireless communication system is critical to 6G.
- Connected intelligence: Unlike previous generations of wireless communication systems, 6G is revolutionary and will update the wireless evolution from "connected things" to "connected intelligence". AI can be applied at each step of the communication process (or each step of signal processing, as we will see later).
- Seamless integration wireless information and energy transfer: 6G wireless networks will transfer power to charge the batteries of devices such as smartphones and sensors. Therefore, wireless information and energy transfer (WIET) will be integrated.
- Ubiquitous super 3D connectivity: Access to networks and core network functions from drones and very low Earth orbit satellites will make super 3D connectivity ubiquitous in 6G.

From the above new network characteristics of 6G, some common requirements may include.
- Small cell networks: The idea of small cell networks was introduced in cellular systems to improve the received signal quality as a result of improved throughput, energy efficiency, and spectral efficiency. As a result, small cell networks are an essential characteristic for 5G and beyond 5G (5GB) communication systems. Therefore, 6G communication systems will also adopt the characteristics of small cell networks.
- Ultra-dense heterogeneous network: Ultra-dense heterogeneous networks will be another important characteristic of 6G communication systems. Multi-tier networks composed of heterogeneous networks will improve overall QoS and reduce costs.
- High-capacity backhaul: Backhaul connectivity is characterized by high-capacity backhaul networks to support large volumes of traffic. High-speed fiber optics and free-space optics (FSO) systems can be a possible solution to this problem.
- Radar technology integrated with mobile technology: High-precision localization (or location-based services) through communication is one of the features of 6G wireless communication systems. Therefore, radar systems will be integrated with 6G networks.
- Softwarization and virtualization: Softwarization and virtualization are two important features that are fundamental to the design process in a 5GB network to ensure flexibility, reconfigurability, and programmability. In addition, billions of devices may be shared on a shared physical infrastructure.

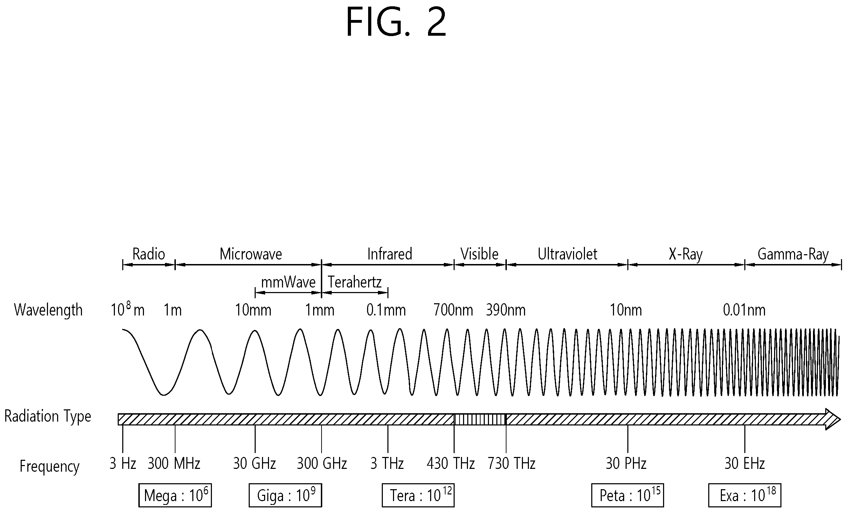

The following describes the key enabling technologies for 6G systems.
- Artificial Intelligence: The most important and new technology to be introduced in the 6G system is AI. The 4G system did not involve AI. 5G systems will support partial or very limited AI. However, 6G systems will be AI-enabled for full automation. Advances in machine learning will create more intelligent networks for real-time communication in 6G. The introduction of AI in telecommunications can streamline and improve real-time data transfer. AI can use numerous analytics to determine how complex target tasks are performed, meaning AI can increase efficiency and reduce processing delays. Time-consuming tasks such as handover, network selection, and resource scheduling can be done instantly by using AI. AI can also play an important role in M2M, machine-to-human, and human-to-machine communications. In addition, AI can be a rapid communication in Brain Computer Interface (BCI). AI-based communication systems can be supported by metamaterials, intelligent structures, intelligent networks, intelligent devices, intelligent cognitive radios, self-sustaining wireless networks, and machine learning.
- THz Communication (Terahertz Communication): Data rates can be increased by increasing bandwidth. This can be accomplished by using sub-THz communication with a wide bandwidth and applying advanced massive MIMO technology. THz waves, also known as submillimeter radiation, refer to frequency bands between 0.1 and 10 THz with corresponding wavelengths typically ranging from 0.03 mm-3 mm. The 100 GHz-300 GHz band range (Sub THz band) is considered the main part of the THz band for cellular communications. Adding the Sub-THz band to the mmWave band increases the capacity of 6G cellular communications. Of the defined THz band, 300 GHz-3 THz is in the far infrared (IR) frequency band. The 300 GHz-3 THz band is part of the optical band, but it is on the border of the optical band, just behind the RF band. Thus, the 300 GHz-3 THz band exhibits similarities to RF. FIG. 2 illustrates an electromagnetic spectrum, according to one embodiment of the present disclosure. The embodiment of FIG. 2 may be combined with various embodiments of the present disclosure. Key characteristics of THz communications include (i) widely available bandwidth to support very high data rates, and (ii) high path loss at high frequencies, for which highly directive antennas are indispensable. The narrow beamwidth produced by highly directive antennas reduces interference. The small wavelength of THz signals allows a much larger number of antenna elements to be integrated into devices and BSs operating in this band. This enables the use of advanced adaptive array techniques that can overcome range limitations.
- Large-scale MIMO Technology (Large-scale MIMO)
- Hologram Beamforming (HBF, Hologram Bmeaforming)
- Optical wireless technology
- Free-space optical transmission backhaul network (FSO Backhaul Network)
- Non-Terrestrial Networks (NTN)
- Quantum Communication
- Cell-free Communication
- Integration of Wireless Information and Power Transmission
- Integration of Wireless Communication and Sensing
- Integrated Access and Backhaul Network
- Big data Analysis
- Reconfigurable Intelligent Surface (Reconfigurable Intelligent Surface)
- Metaverse
- Block-chain
- Unmanned aerial vehicles (UAVs): Unmanned aerial vehicles (UAVs) or drones will be an important component of 6G wireless communications. In most cases, high-speed data wireless connectivity will be provided using UAV technology. BS entities are installed on UAVs to provide cellular connectivity. UAVs have certain features not found in fixed BS infrastructure, such as easy deployment, strong line-of-sight links, and controlled degrees of freedom for mobility. During emergencies, such as natural disasters, the deployment of terrestrial telecom infrastructure is not economically feasible and sometimes cannot provide services in volatile environments. UAVs can easily handle these situations. UAVs will be a new paradigm in wireless communications. This technology facilitates the three basic requirements of wireless networks, which are eMBB, URLLC, and mMTC. UAVs can also support many other purposes such as enhancing network connectivity, fire detection, disaster emergency services, security and surveillance, pollution monitoring, parking monitoring, accident monitoring, etc. Therefore, UAV technology is recognized as one of the most important technologies for 6G communications.
- Autonomous Driving (Autonomous Driving, Self-driving): For complete autonomous driving, vehicle-to-vehicle communication is required to inform each other of dangerous situations, and vehicle-to-vehicle communication with infrastructure such as parking lots and traffic lights is required to check information such as the location of parking information and signal change times. Vehicle to Everything (V2X), a key element in building an autonomous driving infrastructure, is a technology that enables vehicles to communicate and share information with various elements on the road, such as vehicle-to-vehicle (V2V) and vehicle-to-infrastructure (V2I) wireless communication, in order to perform autonomous driving. In order to maximize the performance of autonomous driving and ensure high safety, fast transmission speeds and low latency technologies are essential. In addition, in the future, autonomous driving will go beyond delivering warnings or guidance messages to the driver to actively intervene in vehicle operation and directly control the vehicle in dangerous situations, so the amount of information that needs to be transmitted and received will be vast, and 6G is expected to maximize autonomous driving with faster transmission speeds and lower latency than 5G.

For clarity of description, 5G NR is mainly described, but the technical idea according to an embodiment of the present disclosure is not limited thereto. Various embodiments of the present disclosure may also be applied to a 6G communication system.

Meanwhile, according to prior art, there are Intelligent Transport System (ITS) services that can increase the recognition rate of surrounding road environments and/or objects and reduce the risk of collision by sharing data or information acquired from sensors (e.g., cameras, LiDAR, radar, etc.) installed on vehicles or Road Side Units (RSUs) through communication. As a representative example, there may be message types that exchange sensor information using V2X communication, such as the Collective Perception Message (CPM) of European Telecommunications Standards Institute (ETSI) and the Sensor Data Sharing Message (SDSM) of Society of Automotive Engineers (SAE). For example, a sensor information provider (e.g., RSU, vehicle, or server, etc.) may generate the messages described above (e.g., CPM, SDSM) based on the information obtained by the sensor and provide it to the road user through short-range communication (e.g., Dedicated Short Range Communication (DSRC), PC5) or long-range communication (e.g., Uu interface).

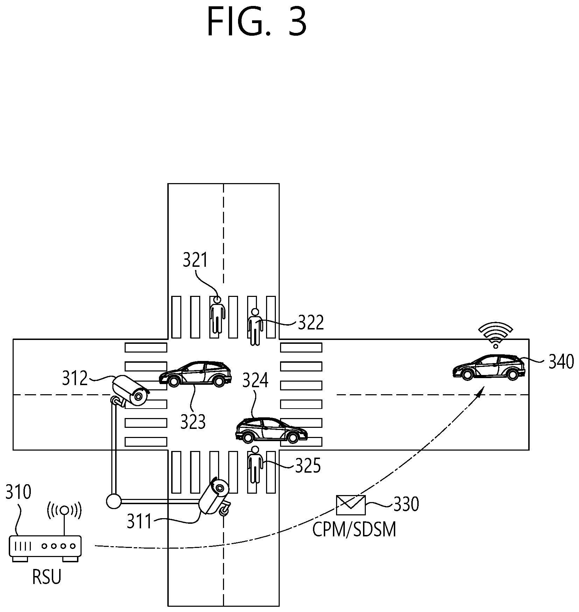

FIG. 3 shows a scenario in which sensor information measured by a sensor equipped on an RSU at an intersection is provided to a receiver through a message. The embodiment of FIG. 3 may be combined with various embodiments of the present disclosure.

To explain the prior art with reference to the embodiment shown in FIG. 3, object information 321 to 325 obtained by sensors 311 and 312 of RSU 310 installed at an intersection may be transmitted to a receiver 340 capable of V2X communication through a message (e.g., CPM or SDSM) 330. For example, the receiver 340 that receives the object information 321 to 325 may recognize objects before entering the intersection, thereby enabling safe driving.

Meanwhile, as prior art related to the contents proposed in the present disclosure, standardized contents are as follows.

According to the ETSI ITS standard (ETSI ITS TS 103 324), the rules for including sensor-measured object information in messages may be defined as follows.

The CPM should include available information about perceived objects inside the perceivedObjectContainer, using one PerceivedObject instance per object, depending on its type.

The inclusion management depends on the Collective Perception Service (CPS) configuration (e.g. stored in the Management Information Base (MIB) and listed in the ETSI ITS standard (ETSI ITS TS 103 324)).
- If ObjectInclusionConfig is configured to "0", no rules are defined in the current standard (ETSI ITS TS 103 324). The sender determines based on its own rules for inclusion of perceived objects.
- If ObjectInclusionConfig is configured to "1", the inclusion rules defined in the current standard (ETSI ITS TS 103 324) apply.

The perceived object inclusion rules vary depending on the object type. Based on the object class with the highest classification confidence, two object types are defined:
- Type A objects: objects of class vruSubclass with VRU profiles pedestrian, bicyclistAndLightVruVehicle or animal or class groupSubclass or otherSubclass
- Type B objects: objects of any class not included in Type A (e.g., objects of class vehicleSubclass or vruSubclass with VRU profile Motorcyclist)

The objects whose object perception quality exceeds the ObjectPerceptionQualityThreshold should be selected for transmission from the object list as a result of the current CPM generation event if the object complies with any of the following conditions:
1) If the object is of Type A:
   a) The object is first detected by the recognition system since the last CPM generation event.
   b) If there is an object of Type A in the object list that has not been included in the CPM for more than T_GenCpmMax/2 time, then all objects of Type A should be included in the currently generated CPM.
2) If the object is of Type B:
   a) The object is first detected by the recognition system after the last CPM generation event.
   b) The Euclidean distance between the current estimated reference point position of the object and the estimated reference point position of the object last included in the CPM exceeds minPositionChangeThreshold.
   c) The difference between the current estimated ground velocity for the reference point of the object and the absolute velocity estimate for the reference point of the object last included in the CPM exceeds minGroundSpeedChangeThreshold.
   d) The estimated velocity orientation for the reference point of the object has changed by at least minGroundVelocityOrientationChangeThreshold after the object was last included in the CPM.
   e) The time elapsed since the object was last included in the CPM is greater than or equal to T_GenCpmMax.

To reduce the number of generated messages, at each message generation event, objects belonging to Type B which are to be included in the CPM of the next generation event (e.g., after T_GenCpm) may be included in the currently generated CPM. To this end, the object that is not selected for transmission in the currently generated CPM may be predicted for the next CPM generation event (e.g., after T_GenCpm), for example, by assuming a constant velocity model. According to this prediction, all objects that should be included in the CPM of the next-generation event may be selected to be included in the currently generated CPM, including the latest available kinematic and attitude states. Applying this mechanism may lead to generated events where no CPM is generated.

If the ITS station (ITS-S) supports Multi-Channel Operation (MCO), the T_GenCpm and the amount of data generated per channel and the generation events should be adjusted by the CPS to satisfy the limits provided by MCO_FAC as defined in the ETSI standard (ETSI TS 103 141). To this end, the object with the lowest Value of Information (VoI) among the recognized objects selected for transmission in the currently generated CPM should be omitted.

If ITS-S supports MCO, when an object is omitted from the currently generated CPM due to low VoI, one or more additional CPMs may be generated to transmit on alternate channels. To this end, taking into account the constraints provided by MCO_FAC, VoI is used to rank objects and select alternate channels on which each object can be included in the CPM. The VoI of an object transmitted on a channel should depend only on data transmitted or received on channels with a higher or equal priority than the channel on which the object is transmitted.

Meanwhile, the use cases specified in SAE standard (SAE J3216) are as below.

Table 2 is a description about detection of an unequipped vehicle by a host vehicle.

**[Table 2]**

| | |
|---|---|
| Use Case Name | Detection of an unequipped vehicle by a host vehicle |
| Overview | Host vehicle (HV) detects and shares the presence of an unequipped vehicle (UV) |
| Brief description | The HV detects a UV in its vicinity. After determining key aspects of the detected vehicle's static and dynamic characteristics, e.g. position, heading, speed, etc., that information is collected into a SDSM and transmitted to RRSUs, RVs and RVRUs. |
| Road environment | Urban, Rural, Highway |
| Participants | Vehicles, RSUs |
| Participants role | There are five participant roles involved in this use case: |
| | - Host Vehicle (HV): Vehicle detecting UV and shares UV characteristics via SDSM |
| | - Unequipped Vehicle (UV): Vehicle detected |
| | - Remote Vehicle (RV): Recipient of the SDSM |
| | - Remote Roadside Unit (RRSU): Recipient of the SDSM |
| | - Remote VRU (RVRU): Recipient of the SDSM |
| Assumptions & preconditions | HV, RV, RVRU, RRSU participate and are equipped |
| Use case flow description | (a) HV detects a UV, determines its static and dynamic characteristics, and collects this information into a SDSM. |
| | (b) HV transmits an SDSM to surrounding entities (RVs, RRSUs, RVRUs) to notify them of the detected UV. |

Table 3 is a description about detection of an equipped vehicle by a host road side unit (HRSU).

**[Table 3]**

| | |
|---|---|
| Use Case Name | Detection of an equipped vehicle by an HRSU |
| Overview | Host RSU (HRSU) detects and shares the presence of a UV |
| Brief description | An HRSU detects a UV in its vicinity. After determining key aspects of the UV's static and dynamic characteristics, e.g. position, heading, speed, etc., that information is collected into an SDSM and transmitted to RVs or RVRUs. |
| Road environment | Urban, Rural, Highway |
| Participants | Vehicles, RSUs |
| Participants role | There are four participant roles involved in this use case: |
| | - Host Roadside Unit (HRSU): Detects the UV and shares UV characteristics via SDSM |
| | - Unequipped Vehicle (UV): Vehicle detected |
| | - Remote Vehicle (RV): Recipient of the SDSM |
| | - Remote VRU (RVRU): Recipient of the SDSM |
| Assumptions & preconditions | RV, RVRU, HRSU participate and are equipped |
| Use case flow description | (a) HRSU detects a UV, determines its static and dynamic characteristics, and collects this information into a SDSM. |
| | (b) HRSU sends an SDSM to surrounding entities (RVs, RVRUs) to notify them of the detected UV. |

Table 4 is a description about UVRU detection by a host vehicle.

**[Table 4]**

| | |
|---|---|
| Use Case Name | Detection of UVRU by a host vehicle |
| Overview | Host vehicle (HV) detects and shares the presence of a UVRU |
| Brief description | The HV detects a UVRU in its vicinity. After determining key aspects of the UVRU's static and dynamic characteristics, e.g. position, heading, speed, etc., that information is collected into an SDSM and transmitted to RRSUs and RVs. |
| Road environment | Urban, Rural, Highway |
| Participants | Vehicles, RSUs, UVRUs |
| Participants role | There are four participant roles involved in this use case: |
| | - Host vehicle (HV): Vehicle detecting UVRU and sharing UVRU characteristics via SDSM |
| | - Unequipped Vulnerable Road User (UVRU): Detected by HV |
| | - Remote Vehicle (RV): Recipient of the SDSM |
| | - Remote Road side Unit (RRSU): Recipient of the SDSM |
| Assumptions & preconditions | HV, RV, RSU participate and are equipped |
| Use case flow description | (a) HV detects a UVRU, determines its static and dynamic characteristics, and collects this information into a SDSM. |
| | (b) HV sends an SDSM to surrounding entities (RVs, RRSUs) to notify them of the detected UVRU. |

Table 5 is a description about UVRU detection by an RSU

**[Table 5]**

| | |
|---|---|
| Use Case Name | Detection of UVRU by an RSU |
| Overview | HRSU detects and shares the presence of UVRU |
| Brief description | An RSU detects a UVRU in its vicinity. After determining key aspects of the UVRU's static and dynamic characteristics, e.g. position, heading, speed, etc., that information is collected into an SDSM and transmitted to RVs. |
| Road environment | Urban, Rural, Highway |
| Participants | Vehicles, RSUs, UVRUs |
| Participants role | There are three participant roles involved in this use case: |
| | - Unequipped Vulnerable Road User (UVRU): Detected by HRSU |
| | - Remote Vehicle (RV): Recipient of the SDSM |
| | - Host Roadside Unit (HRSU): Detects the UVRU and shares UVRU characteristics via SDSM |
| Assumptions & preconditions | RV and HRSU participate and are equipped |
| Use case flow description | (a) HRSU detects a UVRU, and determines its static and dynamic characteristics, and collects this information into a SDSM. |
| | (b) HRSU sends an SDSM to surrounding entities (RVs, RSUs) to notify them of the detected UVRU. |

Table 6 is a description about obstacle detection by a host vehicle

**[Table 6]**

| | |
|---|---|
| Use Case Name | Detection of an obstacle by a host vehicle |
| Overview | HV detects and shares the presence of an obstacle |
| Brief description | The HV detects an obstacle in its vicinity. After determining the static and dynamic characteristics of the obstacle, that information is collected into an SDSM and transmitted to RRSUs and RVs. |
| Road environment | Urban, Rural, Highway |
| Participants | Vehicles, RSUs, obstacles |
| Participants role | There are four participant roles involved in this use case: |
| | - Host Vehicle (HV): Detects obstacle and shares obstacle characteristics via SDSM |
| | - Obstacle: Detected by HV |
| | - Remote Vehicle (RV): Recipient of the SDSM |
| | - Remote Roadside Unit (RRSU): Recipient of the SDSM |
| Assumptions & preconditions | HV, RV, RSU participate and are equipped |
| Use case flow description | (a) HV detects an obstacle, and determines its static and dynamic characteristics, and collects this information into a SDSM. |
| | (b) HV sends an SDSM to surrounding entities (RVs, RRSUs) to notify them of the detected obstacle. |

Table 7 is a description about obstacle detection by an HRSU

**[Table 7]**

| | |
|---|---|
| Use Case Name | Detection of an obstacle by an HRSU |
| Overview | HRSU detects and shares the presence of an obstacle |
| Brief description | An HRSU detects an obstacle in its vicinity. After determining the static and dynamic characteristics of the obstacle, that information is collected into an SDSM and transmitted to other RVs. |
| Road environment | Urban, Rural, Highway |
| Participants | Vehicles, RSUs |
| Participants role | There are three participant roles involved in this use case: |
| | - Obstacle: Detected by HRSU |
| | - Remote Vehicle (RV): Recipient of the SDSM |
| | - Host Roadside Unit (HRSU): Detects obstacle and shares obstacle characteristics via SDSM |
| Assumptions & preconditions | All vehicles are assumed V2X-capable |
| Use case flow description | (a) HRSU detects an obstacle, and determines its static and dynamic characteristics, and collects this information into a SDSM. |
| | (b) HRSU sends an SDSM to surrounding entities (RVs) to notify them of the detected obstacle. |

Meanwhile, the current ITS service basically does not consider the state of the receiver (e.g., location, speed, direction, etc.), and in the case of short-range communication, the sensor information provider (e.g., RSU, vehicle, or server, etc.) may transmit sensor information through broadcast to receivers located within a communication distance, and in the case of long-range communication, the service provider may provide sensor information to all receivers located in a designated area (e.g., tile in the case of Message Queueing Telemetry Transport (MQTT) architecture). In this case, for example, since the information provided by the service provider is transmitted to an unspecified number of receivers located in the area, network traffic may increase as general information including somewhat unnecessary information is shared with some receivers. Additionally, for example, for receivers with limited computing capability, it may be burdensome to process a large amount of information, and for dynamic object information, object information may not be available due to communication delay. Additionally, for example, on devices with limited battery life, increased battery consumption may negatively impact other functions.

In the present disclosure, a method for processing and transmitting valid information (e.g., removing unnecessary information for a receiver (road user or road user group) and information related to the receiver (road user or road user group)) to a specific road user or road user group based on state information or a request of a specific road user or road user group that can communicate, when a sensor information provider (e.g., a vehicle, an RSU, or an ITS server) provides sensor information by unicast, groupcast, multicast, or geocast, and a device supporting the same are proposed.

The method proposed in the present disclosure may be described as (1) an operation of collecting state information or requests of a receiver (or a group of receivers), (2) an operation of selecting valid information, and (3) an operation of transmitting optimized information to the receiver (or a group of receivers).

### (1) an operation of collecting state information or requests of a receiver (or a group of receivers)

For example, a sensor information provider may check the state of the receiver (or a group of receivers) to determine the information required by the receiver. That is, for example, the method of transmitting the state information and request of the receiver and the specific information included therein may be as follows. For example, the receiver may directly or indirectly transmit the state of the receiver through various formats of messages, or directly request the sensor information provider for the required information.

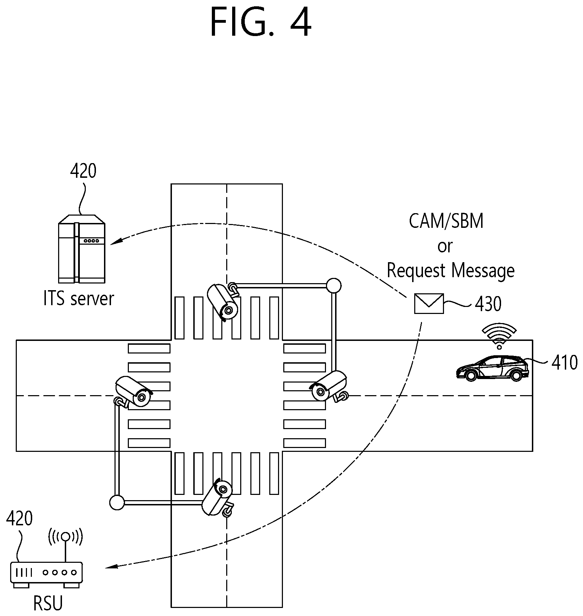

FIG. 4 shows an operation of a sensor information provider directly/indirectly identifying the required information of a receiver. The embodiment of FIG. 4 may be combined with various embodiments of the present disclosure.

Referring to FIG. 4, A vehicle 410, which is a receiver, may transmit a state information message (CAM/BSM) or a request message 430 to an RSU or ITS server 420, which is a sensor information provider. For example, the operation of FIG. 4 may be explained by dividing it into each method as follows.

For example, in an indirect method, the sensor information provider may infer the necessary information of the receiver by using the Cooperative Awareness Message (CAM) or Basic Safety Message (BSM) of V2X communication to obtain the state information of the receiver (or, the receiver group). For example, the receiver may periodically (e.g., 1 to 10 Hz) transmit the message to the surroundings to share its state information. At this time, for example, the sensor information provider may also receive state information messages from multiple receivers within the communication range. For example, the message described above (CAM/BSM) may include state information of various receivers, and the sensor information provider may use information related to 1) velocity, 2) direction, 3) location, and 4) expected driving path among them. For example, the sensor information provider may select a target receiver to provide sensor information to after checking whether the receiver is moving from the current location toward the sensor detection area or the expected driving path of the receiver. For example, referring to FIG. 4, the vehicle 410 of FIG. 4 may be a representative example of selecting a target of a sensor information provision. For example, when the vehicle 410 approaches an intersection while periodically transmitting its own state information message (CAM/BSM) 430, an RSU or ITS server 420 capable of providing sensor information may check the location, velocity, direction, and expected driving path of the vehicle 410 among the information of the state information message 430, and recognize the vehicle 410 as the target of the sensor information provision. For example, if the vehicle 410 leaves the intersection, i.e., moves in the opposite direction of the sensor detection area, the vehicle 410 may be excluded from the target of the sensor information provision. For example, the above information (e.g., location, direction, velocity, expected driving path) may also be utilized in the second operation described below. For example, in addition to the method described above, the sensor information provider may obtain the driving information (velocity, direction, location, expected path) of the receiver by using the directly installed sensor. For example, a camera installed on a traffic light may detect the velocity, direction, and location of the receiver, and an external element such as a turn signal may be used to obtain the expected path of the receiver.

For example, a direct method is one in which the receiver directly transmits a request message to the sensor information provider requesting the information it wants to receive. The sensor information provider may transmit a signal to the surroundings that the sensor information provision service is available. For example, a receiver that receives the signal may determine whether to receive sensor information. For example, after the receiver determines to receive the sensor information, it may comprise a request message including information on 1) detection area, 2) object type (e.g., vehicle, pedestrian on sidewalk/roadway/crosswalk, bicycle, etc.), 3) object state (e.g., dynamic object, static object), and 4) information update period or non-periodic (e.g., one-time reception) to be received. For example, the operation of the sensor information provider comprising a message with the request information received from the receiver is described below.

### (2) an operation of selecting valid information

For example, the sensor information provider may select the sensor information required by the receiver based on the state or request information of the receiver obtained in the operation (1) described above. For example, first of all, a sensor information provider may need to identify the characteristics of the area measured by the sensor in order to effectively select and process the sensor information it provides. For example, characteristics of the sensor measurement area may include fixed structures, roads (e.g., sidewalks, roads, bike lanes, etc.), zone classification (e.g., safety dividers between sidewalks and roads, median strips on roads, etc.), and zone shape (intersections, presence or absence of crosswalks, etc.). Or, for example, a sensor information provider may need to identify information related to a number of objects included in the area measured by the sensor in order to effectively select and process the sensor information it provides. For example, information related to multiple objects included in the area measured by the sensor may include the type of object, the state of the object, a method for distinguishing the object, etc. For example, the sensor information provider may select object information or zones that are valid for the receiver from among multiple object information in the entire area detected by the sensor based on the information described above and the state of the receiver (e.g., type, velocity, direction, location, expected driving path) or request message information. In this case, for example, there may be several ways in which the sensor information provider divides the detection area.

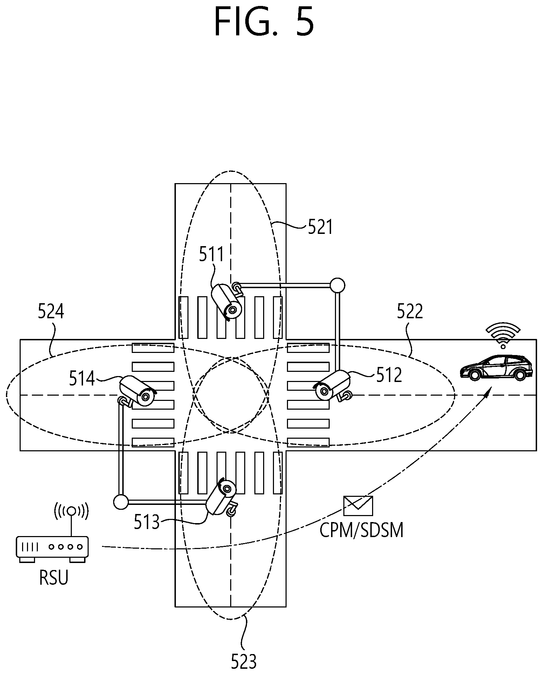

FIG. 5 shows a detection zone of a sensor at an intersection, based on an embodiment of the present disclosure. The embodiment of FIG. 5 may be combined with various embodiments of the present disclosure.

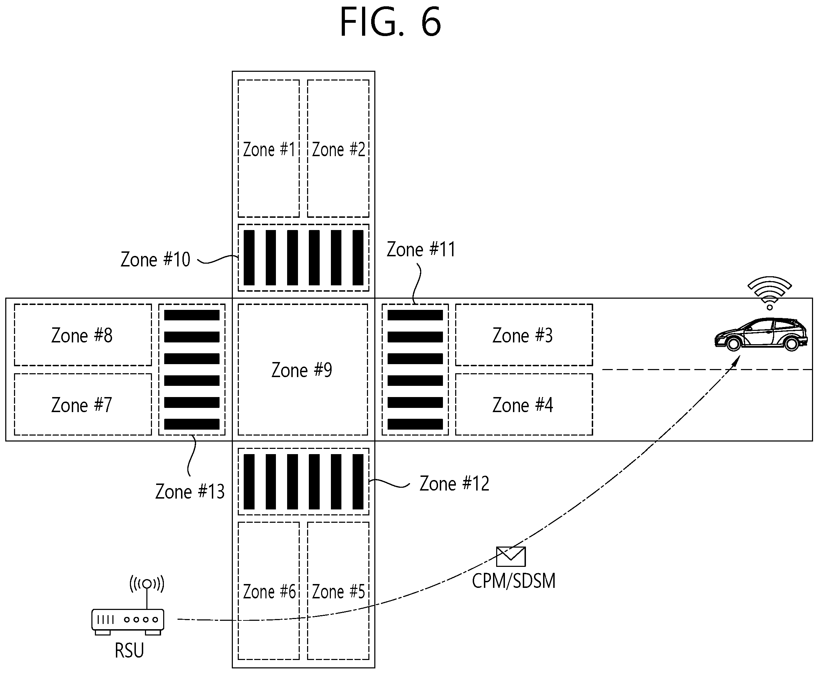

FIG. 6 shows a segmented detection zone, based on an embodiment of the present disclosure. The embodiment of FIG. 6 may be combined with various embodiments of the present disclosure.

For example, when there are zones 521 to 524 detected by four sensors 511 to 514 at an intersection as in FIG. 5, the sensor information provider may divide the detection zones of the RSU as in FIG. 6 (Zone #1 to #13 in FIG. 6) and classify the objects detected in each zone, and select only the zones that are valid for the receiver. For example, the sizes and shapes of the divided zones (Zone #1 to #13) in FIG. 6 may vary.

For example, as in the method described above, in the case where the sensor information provider selects valid object information based on the state information of the receiver, the selection of the detection zone may be primarily calculated based on the position, velocity, and moving direction of the receiver. For example, when a receiver is stopped or approaches at a low speed at a location far from the sensor detection area, the sensor information provider may select only detection areas that are close or have a possibility of collision or object information in the detection area, excluding detection areas that are far from the current position of the receiver or have no possibility of collision. At this time, for example, the sensor information provider may select only areas where the difference (e.g., distance) between each area and location of the receiver is less than [x] m, or calculate the arrival time to each area based on the position, direction, and speed of the receiver and select only areas where the value is less than [x] s.

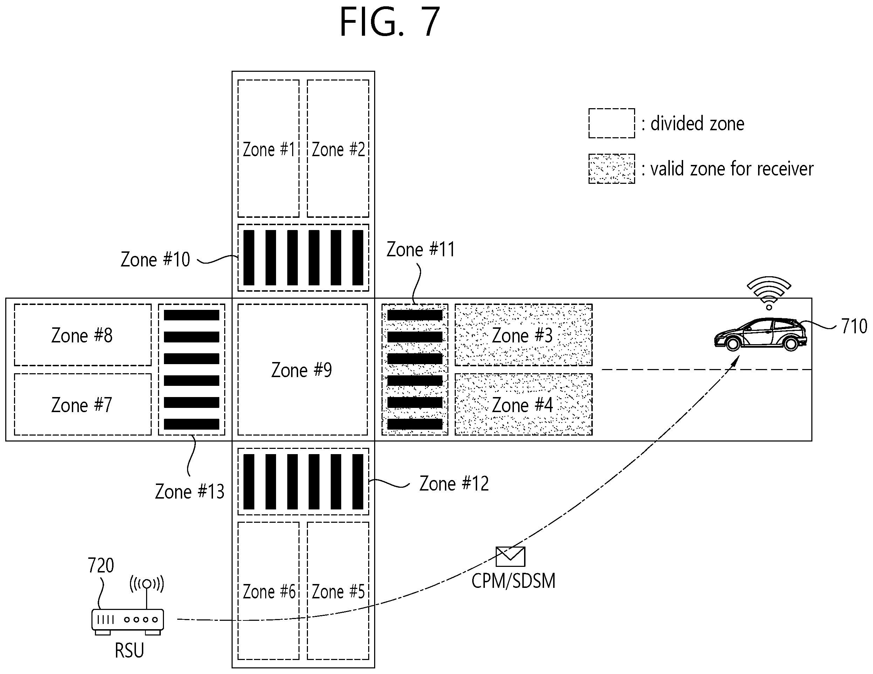

FIG. 7 shows an operation of selecting a valid sensor detection zone for a receiver stopped at an intersection, based on an embodiment of the present disclosure. The embodiment of FIG. 7 may be combined with various embodiments of the present disclosure.

Referring to FIG. 7, when a receiver (e.g., a vehicle) 710 is stopped at an intersection, the RSU 720 may select only a nearby area (e.g., within 20 m) (Zone #3, #4, #11) or object information in a nearby area (e.g., within 20 m) (Zone #3, #4, #11) from the current location of the receiver 710 among the object information detected in the entire detection area (Zone #1 to #13). Additionally, for example, as the velocity of the receiver 710 increases, the size of the detection zone may increase. For example, in FIG. 7, as the velocity of the receiver 710 increases, only object information of zones (Zone #3, #4, #11, #9, #10, #12, #13) whose arrival time is within 60 seconds or zones (Zone #3, #4, #11, #9, #10, #12, #13) whose arrival time is within 60 seconds may be selected.

For example, the detection area may be adjusted in the expected driving path of the receiver as a secondary selection operation. For example, as described above, the predicted driving path of the receiver (the future driving path of the receiver) may be obtained in the operation (1) described above, through the driving prediction (PathPrediction) information of the CAM/BSM transmitted by the receiver, the characteristics of the road and the location of the drivable lane in which the receiver is located (e.g., a lane that only allows straight driving, right turning, left turning, and U-turning, or an overpass, tunnel, highway entrance, etc.), and an external signal (e.g., a turn signal) recognized by a sensor of the sensor information provider. For example, the sensor detection area may be selected by enlarging or reducing the expected driving path of such receivers. That is, for example, the detection area corresponding to the expected driving path and the area that can affect it may be selected.

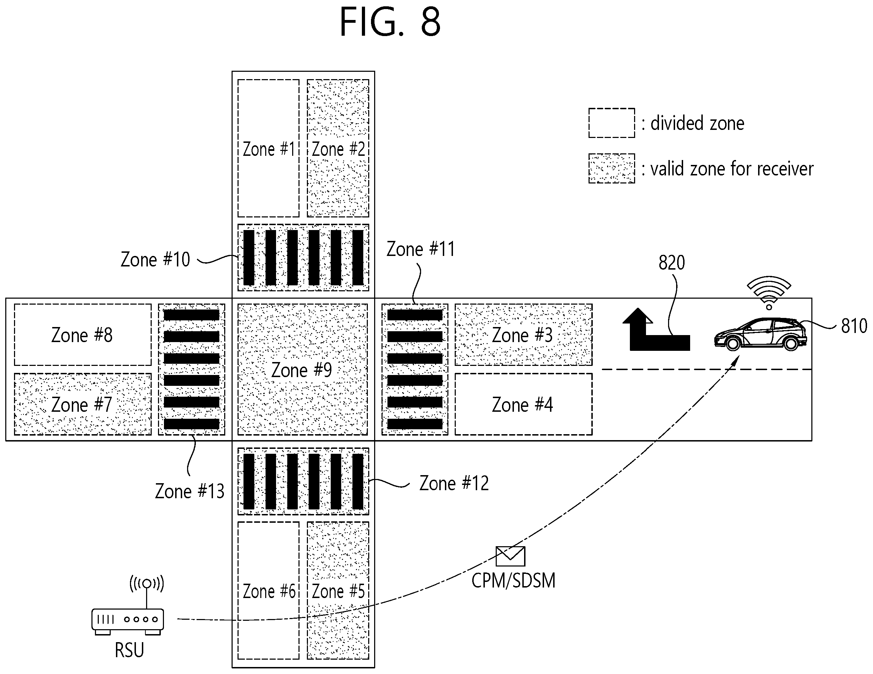

FIG. 8 shows an operation of a sensor selecting a detection zone based on an expected driving path of a receiver, based on an embodiment of the present disclosure. The embodiment of FIG. 8 may be combined with various embodiments of the present disclosure.

Referring to FIG. 8, if the expected driving path of a receiver (e.g., a vehicle) 810 approaching an intersection is a right turn 820, only valid zone with a risk of collision (Zone #2, #3, #5, #7, #9, #10, #11, #12, #13) or object information in a or a valid zone with a risk of collision (Zone #2, #3, #5, #7, #9, #10, #11, #12, #13) may be selected. In this case, for example, the size of the selection zone may be expanded or reduced depending on the accuracy of the expected driving path. For example, if the confidence level of the driving prediction (PathPrediction) of the CAM/BSM is [x]% or less, the detection zone may be conservatively selected. For example, in FIG. 8, if the accuracy of the right turn expected driving path information 820 of the receiver (e.g., vehicle) 810 is low at 80% or less, the detection zone may be expanded.

And, for example, if the roadway and sidewalk where the receiver (e.g., vehicle) is located are divided by an impassable safety divider, or if the roadway on which the receiver is driving and the opposite roadway are divided by an impassable median strip, the selection area may be expanded or reduced. For example, if the road and sidewalk are divided by a safety divider, information on pedestrians on the sidewalk may be omitted. Also, for example, if they are divided by a median strip, information on vehicles driving in the opposite direction may be omitted.

For example, as in the method described above (where the sensor information provider directly receives the request message in operation (1)), if the receiver requests sensor information to be received through a request message, object information may be selected based on the requested information (e.g., area, type, object status, information update period/non-period).

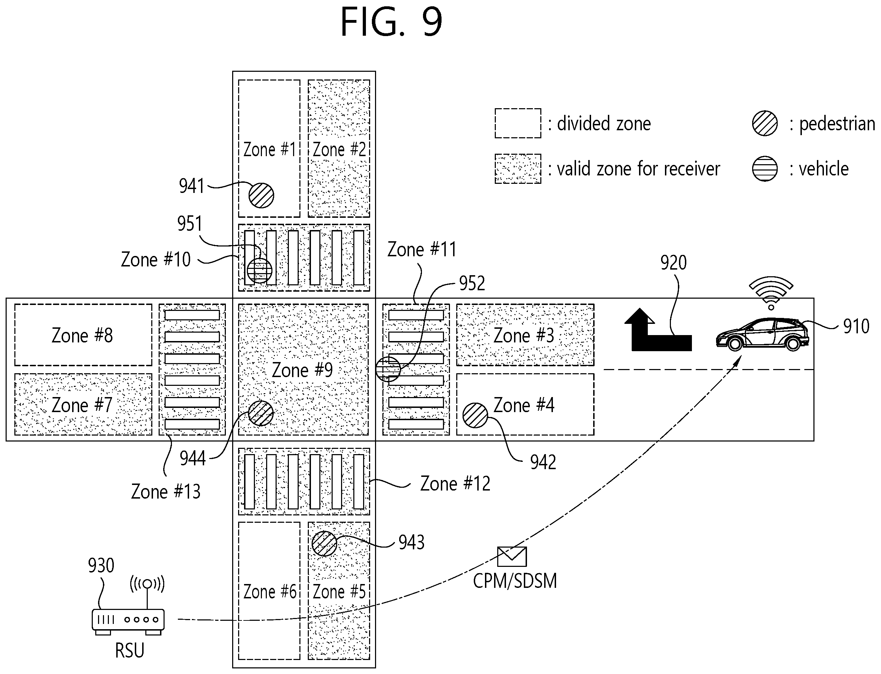

FIG. 9 shows an operation of selecting only object information on a road and crosswalk based on the state information or request message of a receiver, based on an embodiment of the present disclosure. The embodiment of FIG. 9 may be combined with various embodiments of the present disclosure.

For example, in the case of an operation of selecting only object information about a vehicle on a road and a pedestrian on a crosswalk based on a request message of a receiver, referring to FIG. 9, if a receiver (e.g., a vehicle) 910 that plans a right turn 920 transmits a request message including the zone (Zone #2, #3, #5, #7, #9, #10, #11, #12, #13), type (e.g., a vehicle or a pedestrian on a crosswalk), object state (e.g., a dynamic object), and information about update of information (e.g., periodic) to a sensor information provider (e.g., RSU) 930, the sensor information provider may omit pedestrian information on the sidewalk in the detection zone requested by the receiver, and select only object information about pedestrians on a crosswalk and vehicles on the road. For example, in FIG. 9, if the RSU 930 detects vehicles 941 to 944 and pedestrians 951 to 952 with the sensors, only object information 943, 944, 951 and 952 of the requested zone (Zone #2, #3, #5, #7, #9, #10, #11, #12, #13) may be selected. For example, as another example, if a request message is transmitted to receive only information on objects that are not capable of communication (e.g., Non-V2X road users), the RSU may select object information accordingly.

For example, in the case of an operation of selecting only object information about vehicles on a road and pedestrians on a crosswalk based on the state information of a receiver, referring to FIG. 9, a sensor information provider (e.g., RSU) 930 may obtain information related to the entire zone (Zone #1 to #13) and information related to objects (vehicles 941 to 944 and pedestrians 951 to 952) in the entire zone using sensors. In addition, for example, the sensor information provider 930 may receive state information from a receiver (e.g., a vehicle) 910, and may determine the current driving path and expected driving path of the receiver 910 based on the received state information. For example, if the sensor information provider 930 determines that the receiver 910 will make a right turn 920 based on the received state information, the sensor information provider 930 may select a valid zone (e.g., a zone for the receiver 910 to make a right turn 920) (Zone #2, #3, #5, #7, #9, #10, #11, #12, #13) related to the current driving path and expected driving path of the receiver 910 among the entire zones (Zone #1 to #13). In addition, for example, the sensor information provider 930 may select valid objects (vehicles 943 and 944 and pedestrians 951 and 952) in the selected valid zones (Zones #2, #3, #5, #7, #9, #10, #11, #12, #13) from among objects (vehicles 941 to 944 and pedestrians 951 to 952) in the entire zone. For example, the sensor information provider 930 may transmit information related to the valid objects (vehicles 943 and 944 and pedestrians 951, 952) in the valid zones (Zone #2, #3, #5, #7, #9, #10, #11, #12, #13) to the receiver 910 in the following methods.

### (3) an operation of transmitting optimized information to the receiver (or a group of receivers)

For example, the sensor information provider may perform an operation of transmitting selected and processed object information to the receiver. For example, the sensor information provider may select a valid object among the detected objects to the receiver and periodically generate and transmit a message. In this case, for example, the sensor information provider may transmit messages periodically, and even if the selected object does not change over time (e.g., change in position, velocity, direction, etc.), it may be included in the generated message if the transmission period is reached. For example, if the object that the receiver has identified in the previously received message is not in the latest received message, it may be expressed that the object is not in the corresponding detection area. That is, for example, it may mean that the state change of the object (e.g., position movement, velocity change, angle change, etc.) is small, so it is not excluded from the message, but disappears (from the detection area). For example, under these conditions, the message transmission frequency may be changed based on the arrival time (e.g., derived from position, direction, and velocity) of the receiver at a representative sensor detection point (e.g., the center point of a virtual intersection). For example, if the arrival time is [A] sec, the transmission frequency may be determined as [k/A] Hz (k is a constant).

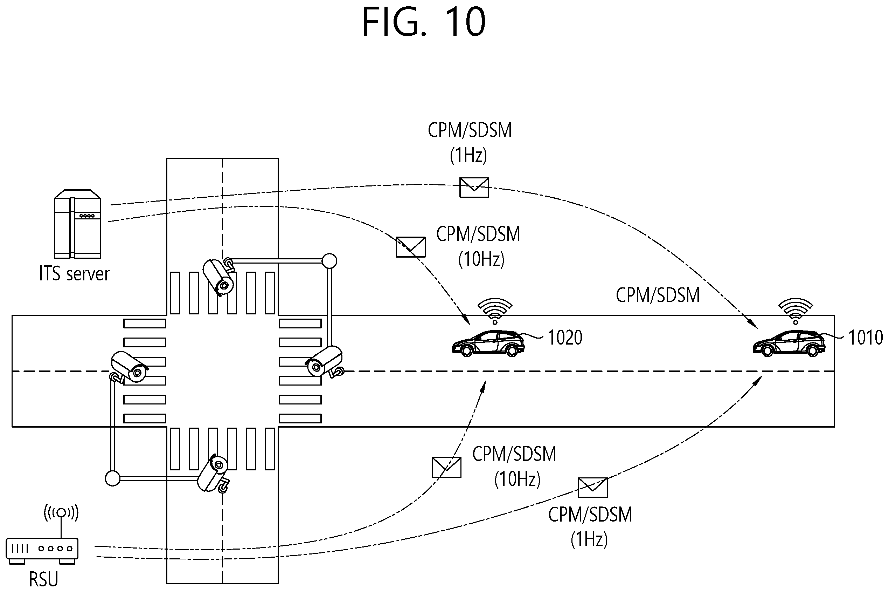

FIG. 10 shows an operation of a sensor information provider changing the transmission period of sensor information based on the location and velocity of a receiver, based on an embodiment of the present disclosure. The embodiment of FIG. 10 may be combined with various embodiments of the present disclosure.

Referring to FIG. 10, for example, in the case of a vehicle 1010 approaching an intersection at a low speed of 10 m/s at a distance of 1000m, i.e., if the arrival time of the sensor detection area (e.g., 100 sec) is sufficiently large, sensor information may be transmitted at a period of 1Hz (constant k=100). For example, conversely, for a vehicle 1020 approaching an intersection at a speed of 10 m/s at a short distance (e.g., 100 m), sensor information may be transmitted at a period of 10Hz (constant k=100). For example, if sensor information is requested by a request message, it may be transmitted according to the update cycle/non-cycle (e.g., one-time) information included in the request message.

Meanwhile, based on the contents proposed in the present disclosure, the existing contents of the ETSI ITS standard (ETSI TS 103 324) mentioned above may be applied with the following modifications/additions.

The CPM should include available information about perceived objects inside the perceivedObjectContainer, using one PerceivedObject instance per object, depending on its type.

The inclusion management depends on the Collective Perception Service (CPS) configuration (e.g. stored in the Management Information Base (MIB) and listed in the ETSI ITS standard (ETSI ITS TS 103 324)).
- If ObjectInclusionConfig is configured to "0", no rules are defined in the current standard (ETSI ITS TS 103 324). The sender determines based on its own rules for inclusion of perceived objects.
- If ObjectInclusionConfig is configured to "1", the inclusion rules defined in the current standard (ETSI ITS TS 103 324) apply.

The perceived object inclusion rules vary depending on the object type. Based on the object class with the highest classification confidence, two object types are defined:
- Type A objects: objects of class vruSubclass with VRU profiles pedestrian, bicyclistAndLightVruVehicle or animal or class groupSubclass or otherSubclass
- Type B objects: objects of any class not included in Type A (e.g., objects of class vehicleSubclass or vruSubclass with VRU profile Motorcyclist)

The objects whose object perception quality exceeds the ObjectPerceptionQualityThreshold should be selected for transmission from the object list as a result of the current CPM generation event if the object complies with any of the following conditions:
1) If the object is of Type A:
   a) The object is first detected by the recognition system since the last CPM generation event.
   b) If there is an object of Type A in the object list that has not been included in the CPM for more than T _GenCpmMax/2 time, then all objects of Type A should be included in the currently generated CPM.
2) If the object is of Type B:
   a) The object is first detected by the recognition system after the last CPM generation event.
   b) The Euclidean distance between the current estimated reference point position of the object and the estimated reference point position of the object last included in the CPM exceeds minPositionChangeThreshold.
   c) The difference between the current estimated ground velocity for the reference point of the object and the absolute velocity estimate for the reference point of the object last included in the CPM exceeds minGroundSpeedChangeThreshold.
   d) The estimated velocity orientation for the reference point of the object has changed by at least minGroundVelocityOrientationChangeThreshold after the object was last included in the CPM.
   e) The time elapsed since the object was last included in the CPM is greater than or equal to T_GenCpmMax.

To reduce the number of generated messages, at each message generation event, objects belonging to Type B which are to be included in the CPM of the next generation event (e.g., after T_GenCpm) may be included in the currently generated CPM. To this end, the object that is not selected for transmission in the currently generated CPM may be predicted for the next CPM generation event (e.g., after T_GenCpm), for example, by assuming a constant velocity model. According to this prediction, all objects that should be included in the CPM of the next-generation event may be selected to be included in the currently generated CPM, including the latest available kinematic and attitude states. Applying this mechanism may lead to generated events where no CPM is generated.

If the ITS station (ITS-S) supports Multi-Channel Operation (MCO), the T_GenCpm and the amount of data generated per channel and the generation events should be adjusted by the CPS to satisfy the limits provided by MCO_FAC as defined in the ETSI standard (ETSI TS 103 141). To this end, the object with the lowest Value of Information (VoI) among the recognized objects selected for transmission in the currently generated CPM should be omitted.

If ITS-S supports MCO, when an object is omitted from the currently generated CPM due to low VoI, one or more additional CPMs may be generated to transmit on alternate channels. To this end, taking into account the constraints provided by MCO_FAC, VoI is used to rank objects and select alternate channels on which each object can be included in the CPM. The VoI of an object transmitted on a channel should depend only on data transmitted or received on channels with a higher or equal priority than the channel on which the object is transmitted.

If the ITS-S supports unicast, groupcast, multicast or geocast transmission, the ITS-S may generate a CPM/SDSM comprising relevant data content (perceived objects) for the receiving ITS-S based on the position, direction, velocity or predicted path of the receiving ITS-S without any irrelevant data content.

According to various embodiments of the present disclosure, as the performance of sensors and communication equipment and the computing capability of transportation infrastructure (e.g., transmitters) are improved, and due to the use of long-range communication (e.g., Uu interface) and the development of short-range communication (e.g., NR-V2X) technologies, unicast, groupcast, multicast, and/or geocast are possible in addition to the existing broadcast, so that the transmitter may selectively provide only the information necessary for the receiver. For example, this function may prevent the service from excessively occupying the communication channel in terms of network traffic and reduce data downlink in the case of long-range communication. In addition, for example, on the receiver side, processing resources for processing received data may be saved, and sensor information may be used with less processing power. In addition, for example, in a receiver where battery consumption is important, battery consumption may be reduced.

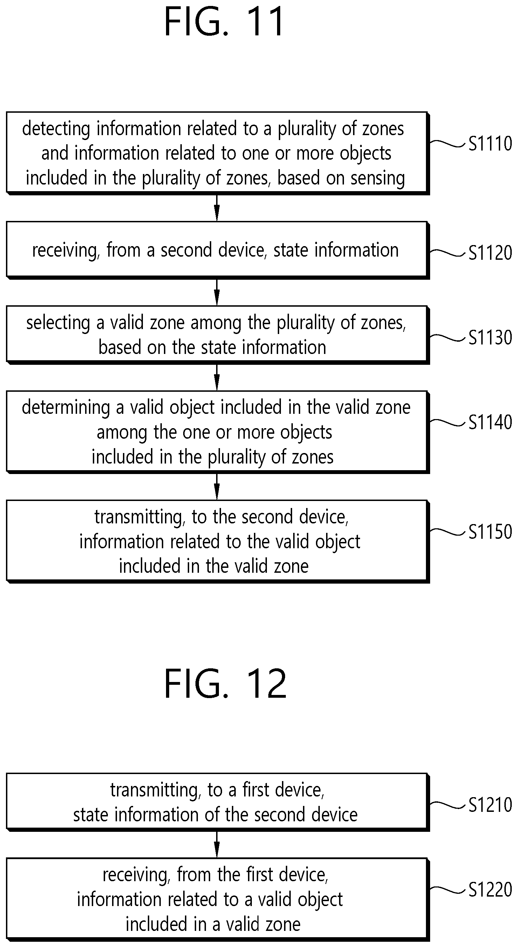

FIG. 11 shows a method for performing wireless communication by a first device, based on an embodiment of the present disclosure. The embodiment of FIG. 11 may be combined with various embodiments of the present disclosure.

Referring to FIG. 11, in step S1110, a first device may detect information related to a plurality of zones and information related to one or more objects included in the plurality of zones, based on sensing. In step S1120, the first device may receive, from a second device, state information. In step S1130, the first device may select a valid zone among the plurality of zones, based on the state information. In step S1140, the first device may determine a valid object included in the valid zone among the one or more objects included in the plurality of zones. In step S1150, the first device may transmit, to the second device, information related to the valid object included in the valid zone.

For example, a current occupied zone of the second device and an expected occupied zone of the second device may be determined based on the state information, and the valid zone may be selected based on at least one of the current occupied zone or the expected occupied zone. For example, the valid zone may be a zone excluding a zone which is not related to the current occupied zone and the expected occupied zone among the plurality of zones. For example, the information related to the plurality of zones may include information related to at least one of a type of a zone, a state of a zone, or a distinction method of a zone, and the valid zone may be a zone excluding a zone which is not related to the current occupied zone and the expected occupied zone among the plurality of zones, based on the information related to the plurality of zones. For example, the information related to the one or more objects included in the plurality of zones may include information related to at least one of a type of an object, a state of an object, or a distinction method of an object, and the valid object may be an object excluding an object which is not related to the current occupied zone and the expected occupied zone among the one or more objects, based on the information related to the one or more objects. For example, the higher an accuracy of the determination related to the current occupied zone and the expected occupied zone, the fewer at least one of (i) a zone selected as the valid zone among the plurality of zones or (ii) an object determined as the valid object among the one or more objects.

For example, based on the state information, the faster the second device reaches the plurality of zones, the more a zone selected as the valid zone among the plurality of zones.

For example, based on the information related to the plurality of zones, the stricter a distinction between the driving direction of the second device and the opposite direction, the fewer a zone selected as the valid zone among the plurality of zones.

For example, the shorter a time that the second device approaches the valid zone, the shorter a transmission period of the information related to the valid object included in the valid zone.

Additionally, for example, the first device may obtain zone configuration information for distinguishing the plurality of zones. For example, the sensing for the plurality of zones may be performed based on the zone configuration information.

For example, the information related to the valid object included in the valid zone may be transmitted, to the second device, based on at least one of a unicast, a groupcast, a multicast, or geocast.

For example, the state information may include information at least one of a type, a velocity, a direction, a location, or driving path of the second device.

For example, the state information may be received, from the second device, based on at least one of a cooperative awareness message (CAM) or basic safety message (BSM).

The proposed method may be applied to devices according to various embodiments of the present disclosure. First, a processor 102 of a first device 100 may detect information related to a plurality of zones and information related to one or more objects included in the plurality of zones, based on sensing. And, the processor 102 of the first device 100 may control a transceiver 106 to receive, from a second device, state information. And, the processor 102 of the first device 100 may select a valid zone among the plurality of zones, based on the state information. And, the processor 102 of the first device 100 may determine a valid object included in the valid zone among the one or more objects included in the plurality of zones. And, the processor 102 of the first device 100 may control the transceiver 106 to transmit, to the second device, information related to the valid object included in the valid zone.

According to one embodiment of the present disclosure, provided is a first device configured to perform wireless communication. The first device may comprise: at least one transceiver; at least one processor; and at least one memory connected to the at least one processor and storing instructions. For example, the instructions, based on being executed by the at least one processor, cause the first device to perform operations comprising: detecting information related to a plurality of zones and information related to one or more objects included in the plurality of zones, based on sensing; receiving, from a second device, state information; selecting a valid zone among the plurality of zones, based on the state information; determining a valid object included in the valid zone among the one or more objects included in the plurality of zones; and transmitting, to the second device, information related to the valid object included in the valid zone.

According to one embodiment of the present disclosure, provided is a processing device configured to control a first device. The processing device may comprise: at least one processor; and at least one memory connected to the at least one processor and storing instructions. For example, the instructions, based on being executed by the at least one processor, cause the first device to perform operations comprising: detecting information related to a plurality of zones and information related to one or more objects included in the plurality of zones, based on sensing; receiving, from a second device, state information; selecting a valid zone among the plurality of zones, based on the state information; determining a valid object included in the valid zone among the one or more objects included in the plurality of zones; and transmitting, to the second device, information related to the valid object included in the valid zone.

According to one embodiment of the present disclosure, provided is a non-transitory computer-readable storage medium recording instructions. For example, the instructions, based on being executed, cause a first device to perform operations comprising: detecting information related to a plurality of zones and information related to one or more objects included in the plurality of zones, based on sensing; receiving, from a second device, state information; selecting a valid zone among the plurality of zones, based on the state information; determining a valid object included in the valid zone among the one or more objects included in the plurality of zones; and transmitting, to the second device, information related to the valid object included in the valid zone.

FIG. 12 shows a method for performing wireless communication by a second device, based on an embodiment of the present disclosure. The embodiment of FIG. 12 may be combined with various embodiments of the present disclosure.

Referring to FIG. 12, in step S1210, a second device may transmit, to a first device, state information of the second device. In step S1220, the second device may receive, from the first device, information related to a valid object included in a valid zone. For example, the valid zone may be selected, based on sensing of a plurality of zones by the first device and the state information, and the valid object may be determined, based on sensing of one or more objects included in the plurality of zones by the first device and the selected valid zone.

The proposed method may be applied to devices according to various embodiments of the present disclosure. First, a processor 202 of a second device 200 may control a transceiver 206 to transmit, to a first device, state information of the second device. And, the processor 202 of the second device 200 may control the transceiver 206 to receive, from the first device, information related to a valid object included in a valid zone. For example, the valid zone may be selected, based on sensing of a plurality of zones by the first device and the state information, and the valid object may be determined, based on sensing of one or more objects included in the plurality of zones by the first device and the selected valid zone.

According to one embodiment of the present disclosure, provided is a second device configured to perform wireless communication. The second device may comprise: at least one transceiver; at least one processor; and at least one memory connected to the at least one processor and storing instructions. For example, the instructions, based on being executed by the at least one processor, cause the second device to perform operations comprising: transmitting, to a first device, state information of the second device; and receiving, from the first device, information related to a valid object included in a valid zone, For example, the valid zone may be selected, based on sensing of a plurality of zones by the first device and the state information, and the valid object may be determined, based on sensing of one or more objects included in the plurality of zones by the first device and the selected valid zone.

According to one embodiment of the present disclosure, provided is a processing device configured to control a second device. The processing device may comprise: at least one processor; and at least one memory connected to the at least one processor and storing instructions. For example, the instructions, based on being executed by the at least one processor, cause the second device to perform operations comprising: transmitting, to a first device, state information of the second device; and receiving, from the first device, information related to a valid object included in a valid zone, For example, the valid zone may be selected, based on sensing of a plurality of zones by the first device and the state information, and the valid object may be determined, based on sensing of one or more objects included in the plurality of zones by the first device and the selected valid zone.

According to one embodiment of the present disclosure, provided is a non-transitory computer-readable storage medium recording instructions. For example, the instructions, based on being executed, cause a second device to perform operations comprising: transmitting, to a first device, state information of the second device; and receiving, from the first device, information related to a valid object included in a valid zone, For example, the valid zone may be selected, based on sensing of a plurality of zones by the first device and the state information, and the valid object may be determined, based on sensing of one or more objects included in the plurality of zones by the first device and the selected valid zone.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

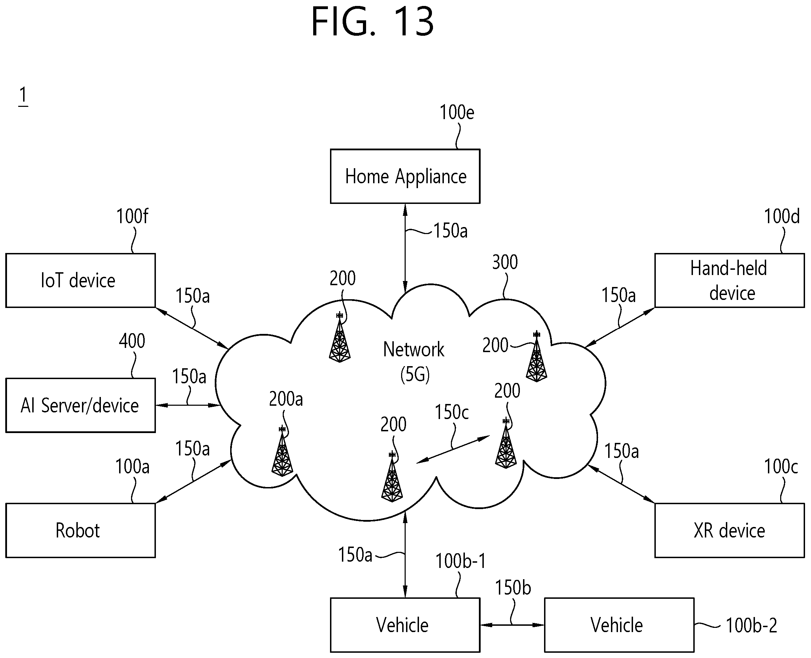

FIG. 13 shows a communication system 1, based on an embodiment of the present disclosure. The embodiment of FIG. 13 may be combined with various embodiments of the present disclosure.

Referring to FIG. 13, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to- Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

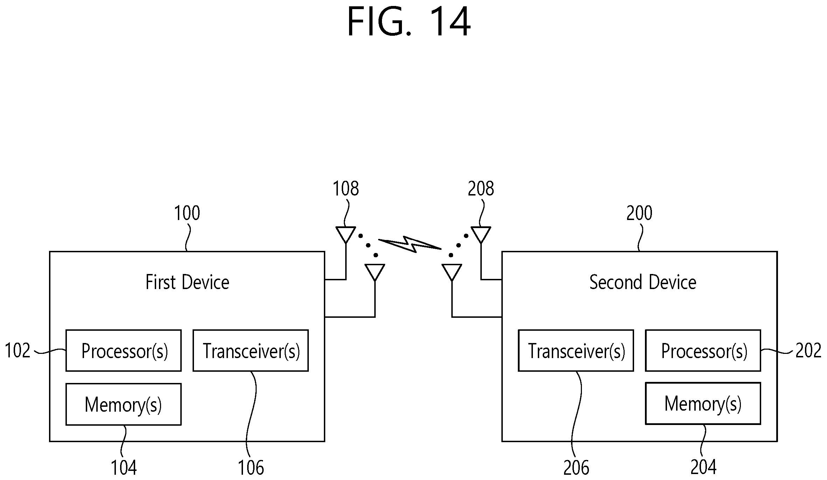

FIG. 14 shows wireless devices, based on an embodiment of the present disclosure. The embodiment of FIG. 14 may be combined with various embodiments of the present disclosure.

Referring to FIG. 14, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 13.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), RandomAccess Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

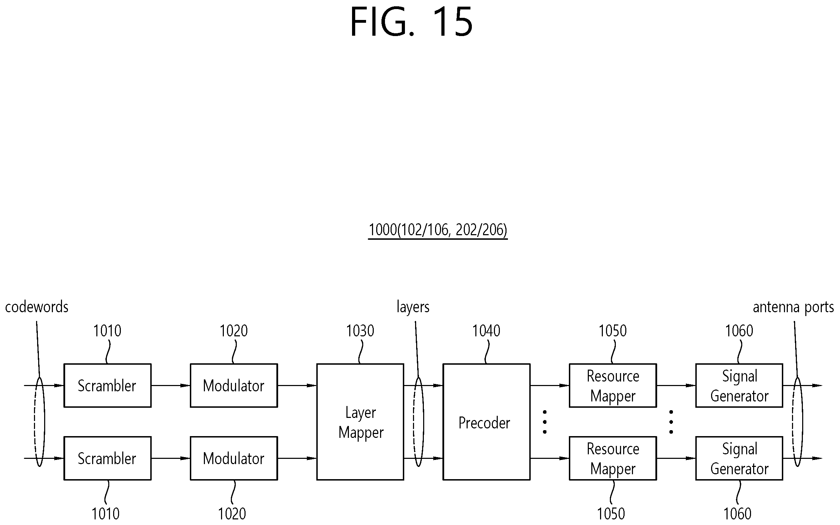

FIG. 15 shows a signal process circuit for a transmission signal, based on an embodiment of the present disclosure. The embodiment of FIG. 15 may be combined with various embodiments of the present disclosure.

Referring to FIG. 15, a signal processing circuit 1000 may include scramblers 1010, modulators 1020, a layer mapper 1030, a precoder 1040, resource mappers 1050, and signal generators 1060. An operation/function of FIG. 15 may be performed, without being limited to, the processors 102 and 202 and/or the transceivers 106 and 206 of FIG. 14. Hardware elements of FIG. 15 may be implemented by the processors 102 and 202 and/or the transceivers 106 and 206 of FIG. 14. For example, blocks 1010 to 1060 may be implemented by the processors 102 and 202 of FIG. 14. Alternatively, the blocks 1010 to 1050 may be implemented by the processors 102 and 202 of FIG. 14 and the block 1060 may be implemented by the transceivers 106 and 206 of FIG. 14.

Codewords may be converted into radio signals via the signal processing circuit 1000 of FIG. 15. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 15. For example, the wireless devices (e.g., 100 and 200 of FIG. 14)may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

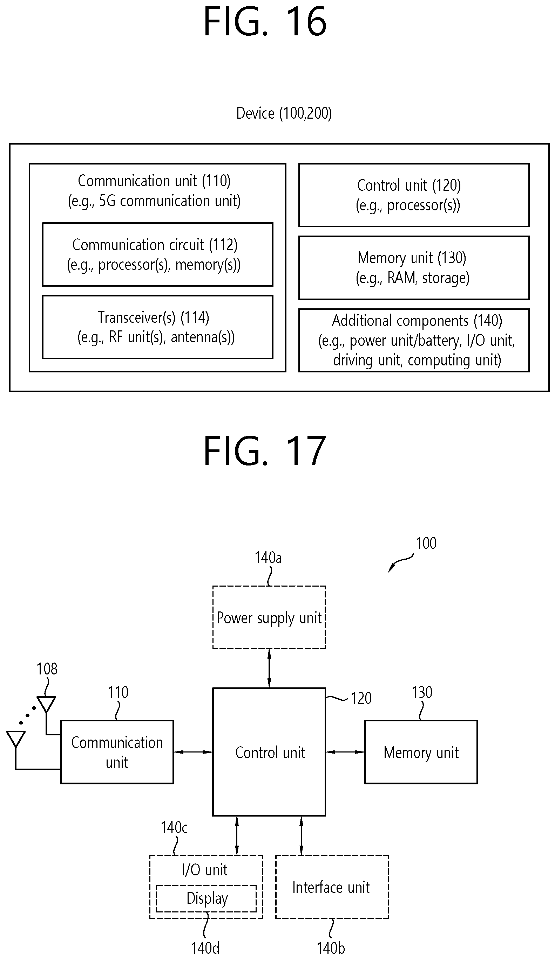

FIG. 16 shows another example of a wireless device, based on an embodiment of the present disclosure. The wireless device may be implemented in various forms according to a use-case/service (refer to FIG. 13). The embodiment of FIG. 16 may be combined with various embodiments of the present disclosure.

Referring to FIG. 16, wireless devices 100 and 200 may correspond to the wireless devices 100 and 200 of FIG. 14 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 14. For example, the transceiver(s) 114 may include the one or more transceivers 106 and 206 and/or the one or more antennas 108 and 208 of FIG. 14. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 13), the vehicles (100b-1 and 100b-2 of FIG. 13), the XR device (100c of FIG. 13), the hand-held device (100d of FIG. 13), the home appliance (100e of FIG. 13), the IoT device (100f of FIG. 13), a digital broadcast terminal, a hologram device, a public safety device, an MTC device, a medicine device, a fintech device (or a finance device), a security device, a climate/environment device, the AI server/device (400 of FIG. 13), the BSs (200 of FIG. 13), a network node, etc. The wireless device may be used in a mobile or fixed place according to a use-example/service.

In FIG. 16, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 16 will be described in detail with reference to the drawings.

FIG. 17 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless Terminal (WT). The embodiment of FIG. 17 may be combined with various embodiments of the present disclosure.

Referring to FIG. 17, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 16, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

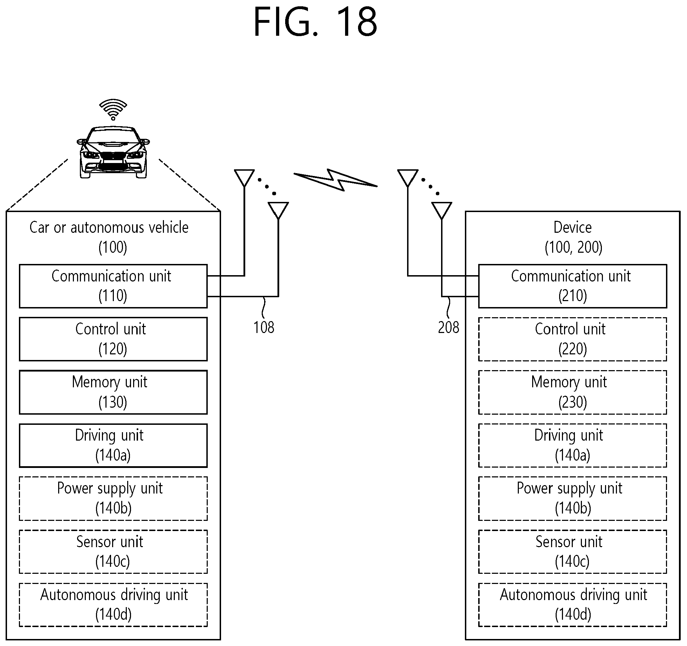

FIG. 18 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 18 may be combined with various embodiments of the present disclosure.

Referring to FIG. 18, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 16, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

1. A method for performing wireless communication by a first device, the method comprising:
detecting information related to a plurality of zones and information related to one or more objects included in the plurality of zones, based on sensing;
receiving, from a second device, state information;
selecting a valid zone among the plurality of zones, based on the state information;
determining a valid object included in the valid zone among the one or more objects included in the plurality of zones; and
transmitting, to the second device, information related to the valid object included in the valid zone.

2. The method of claim 1, wherein a current occupied zone of the second device and an expected occupied zone of the second device is determined based on the state information, and
wherein the valid zone is selected based on at least one of the current occupied zone or the expected occupied zone.

3. The method of claim 2, wherein the valid zone is a zone excluding a zone which is not related to the current occupied zone and the expected occupied zone among the plurality of zones.

4. The method of claim 2, wherein the information related to the plurality of zones includes information related to at least one of a type of a zone, a state of a zone, or a distinction method of a zone, and
wherein the valid zone is a zone excluding a zone which is not related to the current occupied zone and the expected occupied zone among the plurality of zones, based on the information related to the plurality of zones.

5. The method of claim 2, wherein the information related to the one or more objects included in the plurality of zones includes information related to at least one of a type of an object, a state of an object, or a distinction method of an object, and
wherein the valid object is an object excluding an object which is not related to the current occupied zone and the expected occupied zone among the one or more objects, based on the information related to the one or more objects.

6. The method of claim 2, wherein the higher an accuracy of the determination related to the current occupied zone and the expected occupied zone, the fewer at least one of (i) a zone selected as the valid zone among the plurality of zones or (ii) an object determined as the valid object among the one or more objects.

7. The method of claim 1, wherein, based on the state information, the faster the second device reaches the plurality of zones, the more a zone selected as the valid zone among the plurality of zones.

8. The method of claim 1, wherein, based on the information related to the plurality of zones, the stricter a distinction between the driving direction of the second device and the opposite direction, the fewer a zone selected as the valid zone among the plurality of zones.

9. The method of claim 1, wherein the shorter a time that the second device approaches the valid zone, the shorter a transmission period of the information related to the valid object included in the valid zone.

10. The method of claim 1, wherein the greater a mobility of the valid object included in the valid zone, the shorter a transmission period of the information related to the valid object included in the valid zone.

11. The method of claim 1, further comprising:
obtaining zone configuration information for distinguishing the plurality of zones,
wherein the sensing for the plurality of zones is performed based on the zone configuration information.

12. The method of claim 1, wherein the information related to the valid object included in the valid zone is transmitted, to the second device, based on at least one of a unicast, a groupcast, a multicast, or geocast.

13. The method of claim 1, wherein the state information includes information at least one of a type, a velocity, a direction, a location, or driving path of the second device, and
wherein the state information is received, from the second device, based on at least one of a cooperative awareness message (CAM) or basic safety message (BSM).

14. A first device adapted to perform wireless communication, the first device comprising:
at least one transceiver;
at least one processor; and
at least one memory connected to the at least one processor and storing instructions that, based on being executed, cause the first device to perform operations comprising:
detecting information related to a plurality of zones and information related to one or more objects included in the plurality of zones, based on sensing;
receiving, from a second device, state information;
selecting a valid zone among the plurality of zones, based on the state information;
determining a valid object included in the valid zone among the one or more objects included in the plurality of zones; and
transmitting, to the second device, information related to the valid object included in the valid zone.

15. A processing device adapted to control a first device to perform wireless communication, the processing device comprising:
at least one processor; and
at least one memory connected to the at least one processor and storing instructions that, based on being executed, cause the at least one processor to perform operations comprising:
detecting information related to a plurality of zones and information related to one or more objects included in the plurality of zones, based on sensing;
receiving, from a second device, state information;
selecting a valid zone among the plurality of zones, based on the state information;
determining a valid object included in the valid zone among the one or more objects included in the plurality of zones; and
transmitting, to the second device, information related to the valid object included in the valid zone.

16. A non-transitory computer-readable storage medium recording instructions, the instruction, when executed, cause a first device to perform operations comprising:
detecting information related to a plurality of zones and information related to one or more objects included in the plurality of zones, based on sensing;
receiving, from a second device, state information;
selecting a valid zone among the plurality of zones, based on the state information;
determining a valid object included in the valid zone among the one or more objects included in the plurality of zones; and
transmitting, to the second device, information related to the valid object included in the valid zone.

17. A method for performing wireless communication by a second device, the method comprising:
transmitting, to a first device, state information of the second device; and
receiving, from the first device, information related to a valid object included in a valid zone,
wherein the valid zone is selected, based on sensing of a plurality of zones by the first device and the state information, and
wherein the valid object is determined, based on sensing of one or more objects included in the plurality of zones by the first device and the selected valid zone.

18. A second device adapted to perform wireless communication, the second device comprising:
at least one transceiver;
at least one processor; and
at least one memory connected to the at least one processor and storing instructions that, based on being executed, cause the second device to perform operations comprising:
transmitting, to a first device, state information of the second device; and
receiving, from the first device, information related to a valid object included in a valid zone,
wherein the valid zone is selected, based on sensing of a plurality of zones by the first device and the state information, and
wherein the valid object is determined, based on sensing of one or more objects included in the plurality of zones by the first device and the selected valid zone.

19. A processing device adapted to control a second device to perform wireless communication, the processing device comprising:
at least one processor; and
at least one memory connected to the at least one processor and storing instructions that, based on being executed, cause the at least one processor to perform operations comprising:
transmitting, to a first device, state information of the second device; and
receiving, from the first device, information related to a valid object included in a valid zone,
wherein the valid zone is selected, based on sensing of a plurality of zones by the first device and the state information, and
wherein the valid object is determined, based on sensing of one or more objects included in the plurality of zones by the first device and the selected valid zone.

20. A non-transitory computer-readable storage medium recording instructions, the instruction, when executed, cause a second device to perform operations comprising:
transmitting, to a first device, state information of the second device; and
receiving, from the first device, information related to a valid object included in a valid zone,
wherein the valid zone is selected, based on sensing of a plurality of zones by the first device and the state information, and
wherein the valid object is determined, based on sensing of one or more objects included in the plurality of zones by the first device and the selected valid zone.
